## Europäisches Patentamt
## European Patent Office
## Office européen des brevets

(11) Publication number: **0 165 738**
**B1**

(12) **EUROPEAN PATENT SPECIFICATION**

(45) Date of publication of patent specification: **03.05.89**

(21) Application number: **85303962.6**

(22) Date of filing: **04.06.85**

(51) Int. Cl.⁴: **F 16 F 9/04, E 01 F 15/00**

(54) **Energy absorbing pneumatic crash cushion.**

(30) Priority: **13.06.84 US 620066**

(43) Date of publication of application:
**27.12.85 Bulletin 85/52**

(45) Publication of the grant of the patent:
**03.05.89 Bulletin 89/18**

(84) Designated Contracting States:
**BE CH DE GB IT LI NL SE**

(56) References cited:
**DE-A-2 927 087**
**FR-A-1 572 542**
**FR-A-2 217 598**
**US-A-2 773 686**
**US-A-3 254 883**
**US-A-3 741 598**

(73) Proprietor: **ENERGY ABSORPTION SYSTEMS INC.**
**One East Wacker Drive**
**Chicago Illinois (US)**

(72) Inventor: **Gertz, David C.**
**7253 Quailwood Way**
**Citrus Heights California 95610 (US)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

This invention relates to energy absorbing apparatus for preventing a vehicle from impacting a stationary structure. More particularly, this invention relates to a reusable impact attenuation device designed to absorb and dissipate the impact energy of a colliding vehicle or the like.

It is known to position energy absorbing devices along highways and the like to prevent vehicles from impacting stationary structures such as bridge abutments, parapets, signs, traffic dividers and rigid guardrails. Many of these devices suffer one or more of the following disadvantages: they are not reusable; they are difficult to repair or restore; they rebound the impacting vehicle back onto the highway where it may collide with other moving vehicles; they are expensive; they are not readily able to absorb the impact energy of a head on impact; and they occupy an inordinate amount of space.

Reusable energy absorbing devices have been developed. Some of these reusable energy absorbing devices suffer from the drawback of requiring either (1) that the energy absorbing material must be replenished within the barrier after an impact, or (2) that the portion of the apparatus which has been crushed by the impact must be replaced or repaired. Some of these reusable energy absorbing devices also suffer from the drawback that they require an inordinate amount of space and are difficult and expensive to restore to a useful condition.

One of the major problems in constructing any energy absorbing device is the problem of rebounding. When a compressible material reaches the end of its compressive stroke the material tends to rebound. This rebound can throw an impacting vehicle back into traffic, and it can injure the occupants of the impacting vehicle.

Patent application number FR—A—2217598 discloses a pneumatic spring with a membrane and which has two interconnected air chambers. The membrane may be sealed by interposition of a rubber spring to close the interconnection between the two chambers during high axial loading of the spring, thereby altering the characteristics of the spring as between low and high loads.

However, patent application number FR—A—2217598 does not consider the problem which may be encountered, when using a spring-type device as an energy absorber, of rebound.

Thus, there is a need for a reusable impact attenuation device which has little rebound, is easily restored after an impact, and does not require an inordinate amount of space.

The present invention is directed toward an energy absorbing apparatus for preventing a vehicle from impacting an object, comprising at least one air chamber for partially compressing upon the application of an axial impact force. The or each air chamber includes valve means for sealing the air chamber upon the application of the force, so that the valve means for sealing the air chamber upon application of the axial force trap air within the air chamber throughout the compressive stroke of the air chamber and automatically release a portion of the air within the air chamber after air chamber has reached the end of its compressive stroke to reduce rebound.

More specifically, the valve means is responsive to a net axial force which varies as a function of the air pressure of the air chamber and forces applied to the valve means by the axial impact such that the valve means is biased to a sealing position when the net force is oriented in the direction of the axial impact and the valve means is biased to a venting position when the net force is oriented in a direction opposite the axial impact.

Preferably the at least one air chamber comprises a plurality of air chambers arranged end to end along the direction of the axial impact force.

It is further preferable that the valve means comprises a valve plate for receiving the axial force, the valve plate being mounted for substantially free movement with respect to a valve seat supported by the air chamber, the arrangement being such that on application of the axial force the valve plate closes against the valve seat to trap air within the chamber, and that at the start of the rebound stroke of the air chamber the valve plate is lifted from the valve seat by the pressure within the air chamber.

Preferably, the apparatus includes a plurality of air chambers which include valves which seal and vent sequentially. In a presently preferred embodiment, three or more air chambers are utilized, and the valve in the air chamber farthest from the object is the first to seal or vent.

The present invention provides an energy absorbing apparatus which includes at least one air chamber which is compressed upon the application of an axial impact force and vents air after the end of the compressive stroke, thereby achieving the important advantage of minimal rebound. A further advantage of the present invention is that little manpower and time are required to restore the energy absorbing apparatus after an accident.

The preferred embodiment described below does not require an inordinate amount of space. This embodiment utilizes a valve which seals air within an air chamber upon the application of a sufficient axial force and vents air from the air chamber after the air chamber has ended its compressive stroke. In this way, an impacting automobile is not thrown back into traffic. This embodiment includes a plurality of valves which are actuated sequentially, and the walls of this embodiment are pleated and adapted to withstand a sufficient internal pressure so that the apparatus can stop a heavy car travelling at highway speeds.

The following is a description of some specific embodiments of the invention reference being made to the accompanying drawings in which:

Fig. 1 is a longitudinal cross-sectional view of a presently preferred embodiment of the pneumatic crash cushion of the present invention.

Fig. 2 is a top elevational view with parts broken away of the pneumatic crash cushion of Fig. 1 as it is being inspected by a mass.

Fig. 3 is a top elevational view with parts broken away of the pneumatic crash cushion of Fig. 1 as it begins to rebound after being impacted by a mass.

Fig. 4 is an enlarged fragmentary perspective view of part of one of the seals of the embodiment of Fig. 1 in the closed position of Fig. 2.

Fig. 4a is a fragmentary cross-sectional view taken along line 4a—4a of Fig. 4.

Fig. 5 is an enlarged fragmentary perspective view corresponding to Fig. 4 showing part of one of the seals of the embodiment of Fig. 1 in the open position of Figs. 1 and 3.

Fig. 5a is a fragmentary cross-sectional view taken along line 5a—5a of Fig. 5.

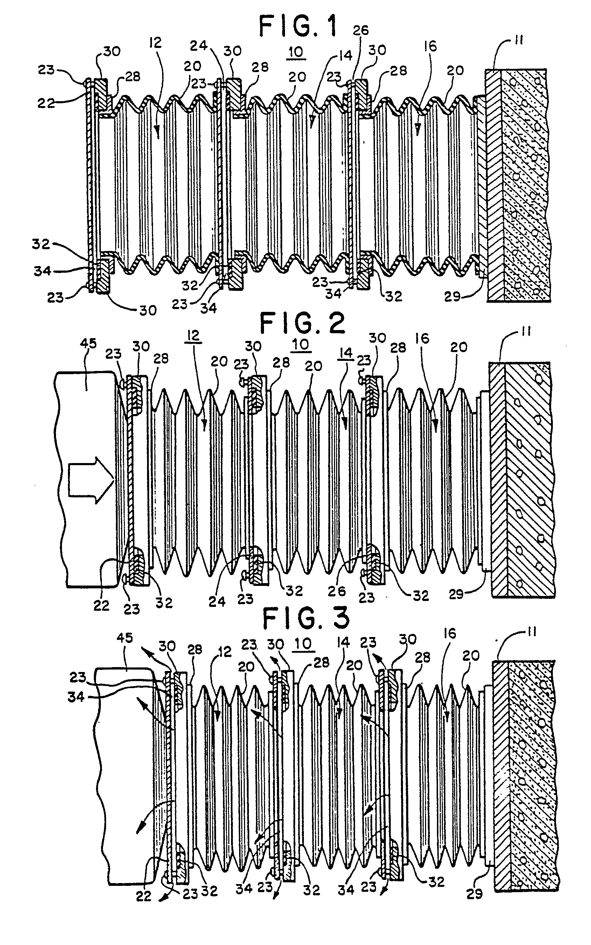

Referring now to the drawings, Fig. 1 illustrates a preferred embodiment of the energy absorbing pneumatic crash cushion 10 of the present invention. The pneumatic crash cushion 10 is designed and adapted to attenuate and dissipate the energy of an impacting vehicle, thereby preventing the vehicle from colliding with a stationary object 11. Moreover, the pneumatic crash cushion 10 is constructed so that there is little rebound at the end of the cushion's compressive stroke.

The energy absorbing pneumatic crash cushion 10 includes a first air chamber 12, a second air chamber 14, and a third air chamber 16. Of course, although only three air chambers 12, 14, and 16 are illustrated in the drawings, the pneumatic crash cushion 10 may include a greater or lesser number of air chambers.

The air chambers 12, 14, and 16 are cylindrical in shape and include pleated walls 20. The pleated walls 20 allow the air chambers 12, 14, and 16 to compress at least partially upon the application of a sufficient axial force.

The air chambers 12, 14, and 16 also include valves 22, 24, and 26 respectively. As will be described in greater detail below, the valves 22, 24, and 26 function to seal air within the air chambers 12, 14, and 16 upon the application of an axial force and to release air from the air chambers at the end of the compressive stroke of the pneumatic crash cushion 10.

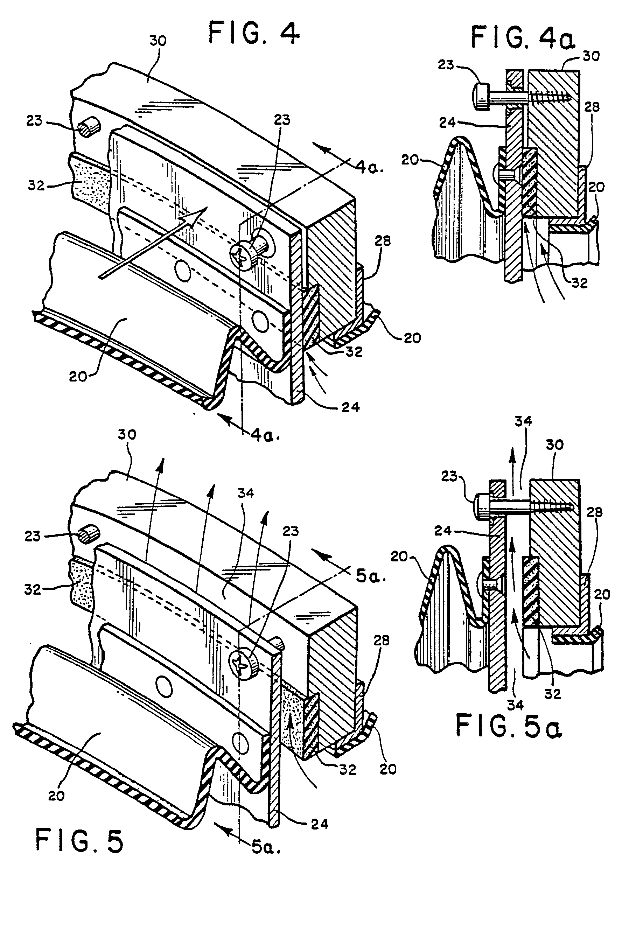

Each of the air chambers 12, 14, and 16 includes a diaphragm attachment ring 28, which is secured to an inertial diaphragm 30, and a valve seat 32. The inertial diaphragm 30 is secured to the attachment ring 28 by screws or some other means. The valves 22, 24, and 26 are attached to the valve seat 32 by shoulder bolts 23 or the like. The shoulder bolts 23 allows the valves 22, 24, and 26 to move axially, thereby creating an annular valve port 34. In order to vent the air chambers 12, 14, and 16 and valves 22, 24, and 26 must move axially only 19mm in this embodiment. As illustrated in Fig. 1, when the valves 22, 24, and 26 are open, the valve ports 34 are located between the valves 22, 24, and 26 and the respective valve seats 32. The valve ports 34 allow the air chambers 12, 14, and 16 to be in fluid communication with the surrounding atmosphere. Figs. 5 and 5a provide more detailed views of a part of one of the valves 24 in the open, vented position.

Fig. 2 illustrates the pneumatic crash cushion 10 in a compressed state, i.e. after the application of an axial impact force which is caused by the deceleration of a mass 45. As illustrated, upon the application of the axial impact force the valves 22, 24, and 26 of the respective air chambers 12, 14, and 16 close and seal the valve ports 34. Figs. 4 and 4a provide more detailed views of part of one of the valves 24 in the closed, sealed position. Once the valves 22, 24, and 26 are so sealed, the pneumatic crash cushion 10, and thereby the air sealed therewithin, begins to compress. The compression of the crash cushion 10, and the air trapped therein, absorbs and dissipates some of the energy of the impacting force of the mass 45. The air trapped within the air chambers 12, 14, and 16 is used as a compressive member to bring the impacting mass 45 to rest.

At the instant that the pneumatic crash cushion 10 is at the end of its compressive stroke, the internal air pressure of the pneumatic crash cushion 10 reaches its highest pressure level. The internal air pressure within the pneumatic crash cushion 10 is nearly uniform in pressure at this time and exerts a constant force per area on the pleated side walls 20 and on the first valve 22. The valves 24 and 26 do not receive a net axial force nor do the valve seats 32 receive any axial force as a result of the internal air pressure of the crash cushion 10.

As the pneumatic crash cushion 10 starts to rebound, as shown in Fig. 3, the first valve 22 is accelerated away from the stationary object 11. The valve seats 32 and inertial diaphragm 30 do not move away from the stationary object 11 as quickly because the air pressure does not impose a net axial force on them.

At the instant the first valve 22 rebounds and moves relative to the stationary object 11, the corresponding valve port 34 is opened and the air pressure in the first air chamber 12 is quickly reduced to the ambient pressure, due to venting. When the air pressure in the first air chamber 12 is reduced, the second valve 24 receives a net axial force due to the pressure difference between the first air chamber 12 and second air chamber 14. The net axial force on the second valve 24 causes the second valve 24 to move away from the stationary object 11, thereby opening the valve port 34 in the second air chamber 14.

When the second valve 24 moves it does not cause the valve seat 32 in the first air chamber 12 to move because the pleated wall 20 is easily collapsed and can not exert a high axial force on the inertial diaphragm 30. The mass of the inertial diaphragm 30 is sufficiently high that any axial force developed by the pleated wall 20 will cause little acceleration and movement of the inertial diaphragm 30. The valve port 34 in the first air chamber 12 will, therefore, remain open as the second and third valves 24 and 26 open sequentially. Once the valves 22, 24, and 26 are opened the internal air pressure of the pneumatic crash cushion 10 reaches ambient pressure quickly. Accordingly, the total rebound of mass 45 is exceedingly small.

Of course, if a fourth and fifth air chamber and valve are present, these will also vent sequentially in the manner described above. The venting of the valves 22, 24, and 26 and thereby the air chambers 12, 14, and 16 greatly reduces the rebound of the pneumatic crash cushion 10.

The pneumatic crash cushion 10 is designed so that it is easily restored to a useful condition after being impacted by a colliding vehicle. To this end, after the collision, the valve seats 32 are moved back to their original position as are the inertial diaphragms 30 as shown in Fig. 1. Because the valve seat 32 does not receive any shearing force there should be no destruction to the valve seat upon the application of the axial impact force. Moreover, the walls 20 of the air cushion 10 are pleated so that the pneumatic cushion 10 may compress, often with no structural damage.

The pleated walls 20 of the crash cushion 10 are preferably made from a rotationally molded vinyl material. This material is preferably then wrapped in a nylon material to give it a sufficient tensile strength. The diaphragm attachment ring 28 is preferably a welded steel flange. The inertial diaphragm 30 is preferably made from plywood coated with fiberglass or steel tubing. The valves 22, 24, and 26 are also preferably made from plywood coated with fiberglass. The valve seat 32 is preferably made of a reinforced rubber material.

The crash cushion 10, and specifically the pleated walls 20, are in this embodiment able to withstand an internal air pressure of at least 275.8 kilopascals. This is a sufficient internal pressure to stop a heavy car travelling at 26.8 ms$^{-1}$.

In use, the pneumatic crash cushion 10 may be secured directly to the stationary object 11. When so used, an end member 29 is preferably secured to the stationary object 11. Purely by way of example, each air chamber 12, 14, and 16 is in this embodiment three feet in diameter and two crash cushions (not shown) are situated in a side-by-side relationship.

It should be understood that various changes and modifications to the preferred embodiments described herein will be apparent to those skilled in the art. It is therefore intended that the foregoing detailed description be regarded as illustrative rather than limiting, and that it be understood that it is the following claims, including all equivalents, which are intended to define the scope of this invention.

## Claims

1. An energy absorbing apparatus (10) comprising:
   at least one air chamber (12, 14, 16) for partially compressing upon the application of an axial impact force, the or each of the air chambers (12, 14, 16) comprising valve means (22, 23, 24, 26, 28, 30, 32), characterised in that the valve means (22, 23, 24, 26, 28, 30, 32) for sealing the air chamber (12, 14, 16) upon the application of the axial force traps air within the air chamber (12, 14, 16) throughout the compressive stroke of the air chamber (12, 14, 16) and automatically releases a portion of the air within the air chamber (12, 14, 16) after the air chamber has reached the end of its compressive stroke to reduce rebound.

2. The apparatus of Claim 1 characterised in that the valve means (22, 23, 24, 26, 28, 30, 32) is responsive to a net axial force which varies as a function of the air pressure of the air chamber and forces applied to the valve means (22, 23, 24, 26, 28, 30, 32) by the axial impact such that the valve means (22, 23, 24, 26, 28, 30, 32) is biased to a sealing position when the net force is oriented in the direction of the axial impact and the valve means is biased to a venting position when the net force is oriented in a direction opposite the axial impact.

3. The apparatus of Claim 1 characterised in that the at least one air chamber (12, 14, 16) comprises a plurality of air chambers arranged end to end along the direction of the axial impact force.

4. The apparatus of Claim 1 characterised in that the valve means (22, 23, 24, 26, 28, 39, 32) comprises a valve plate (22, 24, 26) for receiving the axial force, the valve plate (22, 24, 26) being mounted for substantially free movement with respect to a valve seat (32) supported by the air chamber (12, 14, 16), the arrangement being such that on application of the axial force the valve plate (22, 24, 26) closes against the valve seat (32) to trap air within the chamber (12, 14, 16), and that at the start of the rebound stroke of the air chamber (12, 14, 16) the valve plate (22, 24, 26) is lifted from the valve seat (32) by the pressure within the air chamber (12, 14, 16).

5. The apparatus of Claim 1 or 2 or 3 or 4 characterised in that the or each of the air chambers (12, 14, 16) comprises a respective bellowed wall (20).

6. The apparatus of Claim 5 characterised in that the or each of the bellowed walls (20) is constructed from vinyl wrapped in nylon.

7. The apparatus of claim 5 or 6 characterised in that each of the bellowed walls (20) is constructed to withstand a sufficient internal pressure to prevent a heavy automobile travelling at highway speeds from impacting a stationary object.

8. The apparatus of Claim 5—7 characterised in that each of the bellowed walls (20) has a sufficient tensile strength to withstand an internal pressure of at least 275.8 kilopascals.

9. The apparatus of Claim 1 or 2 or 3 or 4 or 5 or 7 or 8 characterised in that each of the valve means (22, 23, 24, 26, 28, 30) vents the air chamber (12, 14, 16) to atmosphere.

10. The apparatus of Claim 3 characterised in that the valve means (22, 23, 24, 26, 28, 30) are constructed to close sequentially during the compressive stroke and to vent air from the respective air chambers (12, 14, 16) sequentially.

## Patentansprüche

1. Energieabsorptionsvorrichtung (10), enthaltend:
wenigstens eine Luftkammer (12, 14, 16) zum teilweisen Zusammendrucken bei der Einwirkung einer axialen Aufschlagkraft, wobei die oder jede der Luftkammern (12, 14, 16) eine Ventileinrichtung (22, 23, 24, 26, 28, 30, 32) aufweist, dadurch gekennzeichnet, daß die ventileinrichtung (22, 23, 24, 26, 28, 30, 32) zum Verschließen der Luftkammer (12, 14, 16) bei Einwirkung der axialen Kraft die in der Luftkammer (12, 14, 16) enthaltene Luft über der Verdichtungstakt der Luftkammer (12, 14, 16) einschließt und einen Teril der Luft in der Luftkammer (12, 14, 16) einschließt und einen Teil der luft in der Luftkammer (12, 14, 16) automatisch freigibt, nachdem die Luftkammer das Ende ihres Verdichtungsstaktes erreicht hat, um Rückprall zu vermindern.

2. Vorrichtung nach Anspruch 1, dadurch gekennzeichnet, daß die Ventileinrichtung (22, 23, 24, 26, 28, 30, 32) auf eine Nettoaxialkraft, die als funktion des Luftdrucks der Luftkammer variiert, und auf der Ventileinrichtung (22, 23, 24, 26, 28, 30, 32) durch den axialen Aufschlag zugeführte Kräfte derart anspricht, daß die Ventileinrichtung (22, 23, 24, 26, 28, 30, 32) in eine Schließstellung vorgespannt wird, wenn die Nettokraft in der Richtung des axialen Aufschlags gerichtet ist, und die Ventileinrichtung in eine Entlüftungsposition vorgespannt wird, wenn die Nettokraft in einer zum axialen Aufschlag entgegengerichteten Richtung gerichtet ist.

3. Vorrichtung nach Anspruch 1, dadurch gekennzeichnet, daß die wenigstens eine Luftkammer (12, 14, 16) mehrere Luftkammern enthält, die hintereinander in Richtung der axialen Aufschlagkraft angeordnet sind.

4. Vorrichtung nach Anspruch 1, dadurch gekennzeichnet, daß die Ventileinrichtung (22, 23, 24, 26, 28, 30, 32) eine Ventilplatte (22, 24, 26) zur Aufnahme der axialen Kraft enthält, die im wesentlichen freibeweglich in bezug auf einen Ventilsitz (32) gehalten ist, der durch die Luftkammer (12, 14, 16) abgestützt ist, wobei die Anordnung derart ist, daß bei Einwirkung der axialen Kraft die Ventilplatte (22, 24, 26) gegen den Ventilsitz (32) schließt, um Luft in der Kammer (12, 14, 16) einzuschließen, und daß am Beginn des Rückpralltaktes der Luftkammer (12, 14, 16) die Ventilplatte (22, 24, 26) vom Ventilsitz (32) durch den Druck in der Luftkammer (12, 14, 16) abgehoben wird.

5. Vorrichtung nach Anspruch 1 oder 2 oder 3 oder 4, dadurch gekennzeichnet, daß die oder jede der Luftkammern (12, 14, 16) jeweils eine balgenförmige Wand (20) aufweist.

6. Vorrichtung nach Anspruch 5, dadurch gekennzeichnet, daß die oder jede der balgenförmigen Wände (20) aus in Nylon eingebettetem Vinyl besteht.

7. Vorrichtung nach Anspruch 5 oder 6, dadurch gekennzeichnet, daß jede der balgenförmigen Wände (20) so aufgebaut ist, daß sie einem ausreichenden Innendruck widersteht, um ein mit Fernstraßengeschwindigkeiten fahrendes schweres Fahrzeug am Aufprall auf ein stationäres Objekt zu hindern.

8. Vorrichtung nach Anspruch 5 bis 7, dadurch gekennzeichnet, daß jede der balgenförmigen Wände (20) eine ausreichende Zugfestigkeit aufweist, um einem Innendruck von wenigstens 275,8 kPa zu widerstehen.

9. Vorrichtung nach Anspruch 1 oder 2 oder 3 oder 4 oder 5 oder 7 oder 8, dadurch gekennzeichnet, daß jede der Ventileinrichtungen (22, 23, 24, 26, 28, 30) die Luftkammer (12, 14, 16) zur Atmosphäre entlüftet.

10. Vorrichtung nach Anspruch 3, dadurch gekennzeichnet, daß die Ventileinrichtungen (22, 23, 24, 26, 28, 30) so aufgebaut sind, daß sie während des Verdichtungstaktes nachineander schließen und Luft aus den jeweiligen Luftkammern (12, 14, 16) nacheinander ablassen.

## Revendications

1. Appareil d'absorption d'énergie (10) comprenant:
au moins une chambre à air (12, 14, 16) pour la compression partielle lors de l'application d'une force de choc axiale, la ou chacune des chambres à air (12, 14, 16) comprenant des moyens de vanne (22, 24, 26, 28, 30, 32), caractérisé en ce que les moyens de vanne (22, 23, 24, 26, 28, 30, 32) pour fermer la chambre à air (12, 14, 16) lors de l'application de la force axiale emprisonnent l'air à l'intérieur de la chambre à air (12, 14, 16) tout au long de la course de compression de la chambre à air (12, 14, 16) et libèrent automatiquement une partie de l'air à l'intérieur de la chambre à air (12, 14, 16) après que la chambre à air ait atteint l'extrémité de sa course de compression pour réduire le rebond.

2. Appareil suivant la revendication 1, caractérisé en ce que les moyens de vanne (22, 23, 24, 26, 28, 30, 32) sont sensibles à une force axiale globale qui varie en fonction de la pression d'air de la chambre à air et aux forces appliquées aux moyens de vanne (22, 23, 24, 26, 28, 30, 32) par le choc axial de telle sorte que les moyens de vanne (22, 23, 24, 26, 28, 30, 32) soient sollicités vers une position de fermeture lorsque la force globale est orientée dans la direction du choc axial et que les moyens de vanne sont sollicités vers une position d'ouverture lorsque la force globale est orientée dans une direction opposés au choc axial.

3. Appareil suivant la revendication 1, caractérisé en ce qu'au moins une chambre à air (12, 14, 16) comprend une série de chambre à air aménagées extrémité contre extrémité le long de la direction de la force de choc axiale.

4. Appareil suivant la revendication 1, caractérisé en ce que les moyens de vanne (22, 23, 24, 26, 28, 39, 32) comprennent une plaque de vanne (22, 24, 26) destinée à recevoir la force axiale, la plaque de vanne (22, 24, 26) étant montée pour se déplacer sensiblement librement par rapport à un siège de vanne (32) supporté par la chambre à air (12, 14, 16), l'agencement étant tel que lors de l'application de la force axiale la plaque de vanne (22, 24, 26) se ferme contre le siège de vanne (32) pour emprisonner l'air à l'intérieur de la chambre (12, 14, 16) et qu'au commencement de la course de rebond de la chambre à air (12, 14, 16), la plaque de vanne (22, 24, 26) soit soulevée du siège de vanne (32) par la pression à l'intérieur de la chambre à air (12, 14, 16).

5. Appareil suivant l'une quelconque des revendications 1, 2, 3 et 4, caractérisé en ce que la ou chacune des chambres à air (12, 14, 16) comprend une paroi en forme de soufflet respective (20).

6. Appareil suivant la revendication 5, caractérisé en ce que la ou chacune des parois en forme de soufflet (20) est faite de vinyle enveloppé dans du Nylon.

7. Appareil suivant l'une ou l'autre des revendications 5 et 6, caractérisé en ce que chacune des parois en forme de soufflet (20) est construite de manière à résister à une pression intérieure suffisante pour empêcher une lourde automobile se déplaçant à vitesse élevée d'entrer en contact avec un objet stationnaire.

8. Appareil suivant l'une quelconque des revendications 5 à 7, caractérisé en ce que chacune des parois en forme de soufflet (20) a une résistance à la traction suffisante pour résister à une pression intérieure d'au moins 275,8 kilopascals.

9. Appareil suivant l'une quelconque des revendications 1, 2, 3, 4, 5, 7 et 8, caractérisé en ce que chacun des moyens de vanne (22, 23, 24, 26, 28, 30) met en communication la chambre à air (12, 14, 16) avec l'atmosphère.

10. Appareil suivant la revendication 3, caractérisé en ce que les moyens de vanne (22, 23, 24, 26, 28, 30) sont construits pour se fermer successivement au cours de la course de compression et pour expulser successivement l'air des chambres à air respectives (12, 14, 16).

# FIG. 1

# FIG. 2

# FIG. 3

FIG. 4

FIG. 4a

FIG. 5

FIG. 5a